(19) **Europäisches Patentamt**
**European Patent Office**
**Office européen des brevets**

(11) **EP 2 072 207 B1**

(12) **EUROPEAN PATENT SPECIFICATION**

(45) Date of publication and mention
of the grant of the patent:
**09.03.2011 Bulletin 2011/10**

(51) Int Cl.:
**B29C 44/00** *(2006.01)*

(21) Application number: **08021413.3**

(22) Date of filing: **10.12.2008**

(54) **Expanded polypropylene resin beads and foamed molded article thereof**

Expandierte Polypropylenharzperlen und damit hergestellte Formkörper

Perles expansées de résine de polypropylène et moulages realisé a partie de ces perles

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **17.12.2007 JP 2007324644**

(43) Date of publication of application:
**24.06.2009 Bulletin 2009/26**

(73) Proprietor: **JSP CORPORATION
Tokyo 100-0005 (JP)**

(72) Inventors:
• **Oikawa, Masaharu
Yokkaichi-shi
Mie 510-0881 (JP)**
• **Nohara, Tokunobu
Yokkaichi-shi
Mie 510-0881 (JP)**

(74) Representative: **Müller-Gerbes Wagner Albiger
Patentanwälte
Friedrich-Breuer-Strasse 72-78
53225 Bonn (DE)**

(56) References cited:
**EP-A- 1 036 814          WO-A-03/078127
US-A1- 2003 124 335    US-A1- 2004 054 042
US-A1- 2004 256 757**

• **DATABASE WPI Week 200017 Thomson
Scientific, London, GB; AN 2000-195271
XP002516681 & WO 00/06636 A (KANEKA CORP)
10 February 2000 (2000-02-10)**
• **DATABASE WPI Week 199745 Thomson
Scientific, London, GB; AN 1997-486508
XP002516682 & JP 09 227710 A (KANEBUCHI
KAGAKU KOGYO KK) 2 September 1997
(1997-09-02)**

**Description**

BACKGROUND OF THE INVENTION

Technical Field:

The present invention relates to expanded polypropylene resin beads and to a foamed molded article obtained by molding the beads in a mold cavity.

Description of Prior Art

A polypropylene resin is now utilized in various fields because of its excellent balance between the mechanical strength, heat resistance, processability and cost and excellent performance of incineration and recyclability. Because a foamed molded article obtained by molding expanded polypropylene resin beads in a mold cavity (such a foamed molded article will be hereinafter occasionally referred to as "PP bead molding" for the sake of brevity, and expanded polypropylene resin beads will be hereinafter occasionally referred to as "PP beads" for the sake of brevity) can retain the above excellent properties and have additional characteristics such as cushioning property, heat resistance and lightness in weight, they are utilized for various applications such as packaging materials, construction materials and impact absorbing materials for vehicles.

The PP bead moldings have generally superior heat resistance, chemical resistance, toughness and compressive strain recovery as compared with foamed molded articles of expanded polystyrene beads which are also utilized for the same applications as those of the PP bead moldings.

However, in order to secondarily expand and fusion-bond PP beads in a mold cavity for producing a PP bead molding, it is necessary to use a higher temperature, namely steam with a higher saturation vapor pressure, than that for use in the production of foamed molded articles of expanded polystyrene beads. Thus, the production of PP bead moldings needs a mold having a highly pressure resistant structure and a specific molding apparatus of a high pressure pressing type and requires a high energy cost.

To cope with the above problem, Japanese Laid-Open Patent Publication No. JP-2000-894-A proposes coating PP beads with a resin having a low melting point. In order to prepare such coated PP beads, however, complicated apparatus and process are required. Further, although fusion-bonding efficiency of the PP beads is improved, the produced PP bead molding is not fully satisfactory with respect to the appearance because the secondary expansion of the PP beads is insufficient. In order to improve the secondary expansion, it is necessary to increase an inside pressure of the PP beads with a pressurized gas, to press-fill the PP beads in a mold cavity with a high ratio or to use high temperature steam which is contrary to the initial objective of JP-2000-894-A.

Reference is further made to WO 03/078127 A, US 2004/256757 A1 and US 2003/124335 A1 which describe similar technology to JP-A-2000-894 described above. However, these documents do not disclose in-mold molding of expanded polypropylene resin beads using very low temperature steam.

As an alternate solution to the above problem, Japanese Laid-Open Patent Publication No. JP-H06-240041-A proposes the use of, as a base resin for PP beads, a polypropylene resin having a relatively low melting point such as a polypropylene resin obtained using a metallocene polymerization catalyst. In general, a polypropylene resin produced using a metallocene polymerization catalyst is able to have a lower melting point than that produced using a Ziegler Natta catalyst. In the technique as taught by JP-H06-240041-A in which PP beads produced using a metallocene polymerization catalyst are used, however, there is plenty of room left for improvement with respect to reduction of the saturation vapor pressure of steam used as a heating medium in the in-mold.molding, appearance of the obtained PP bead molding and moldability such as fusion bonding efficiency of the PP beads.

Japanese Laid-Open Patent Publication No. JP-H10-292064-A discloses non-cross-linked PP beads of a modified polypropylene resin obtained by graft-polymerizing a vinyl monomer to a polypropylene resin. The modified resin has a polypropylene resin content of 97 to 65% by weight and a vinyl polymer content of 3 to 35% by weight. Whilst the proposed PP beads may permit the use of steam with a reduced saturation vapor pressure by using a polypropylene resin having a low melting point. The obtained PP bead molding causes a problem with respect to the heat resistance which generally depends upon the melting point or glass transition point of the PP beads. A very similar technology is disclosed in JP 09227710 A

Japanese Laid-Open Patent Publication No. JP-2006-96805-A discloses PP beads made of two polypropylene resins having a difference in melting point therebetween of 15 to 30°C, a melt index (JIS K7210-1999, Test Condition M (at a temperature of 230°C and a load of 2.16 kg)) of 3 to 20 g/10 min and an expansion ratio of 10 to 50. The proposed PP beads, however, require a molding temperature of more than 140°C, i.e. steam with a high saturation vapor pressure must be used as a heating medium for molding the PP beads.

US 2004/054042 A1 pertains to production of polypropylene resin pre-expanded particles using water as a foaming agent and is aimed at minimization of variation in expansion ratio which is a main cause of fluctuation of weight of molded articles and at minimization of variation in cell diameter which is a cause of unevenness of color and deterioration of appearance of molded articles. D3 discloses polypropylene resin pre-expanded particles of a base resin composed of a polypropylene resin and a compound having a triazine skeleton and a molecular weight of at most 300 per triazine skeleton unit but does not disclose in-mold molding of expanded polypropylene resin beads using very low temperature steam.

WO 00/06636 A is aimed at reduction of cooling time of in-mold molding of polypropylene pre-expanded particles for the production of molded articles and discloses polypropylene resin pre-expanded particles showing expandability, [(i.e. expansion ratio of polypropylene pre-expanded particles after steam heating)/(expansion ratio of polypropylene pre-expanded particles before steam heating)] of 1.0 to 1.8 when heated by steam having a temperature equal to the melting point peak temperature of the base resin constituting the particles. The expandability of the pre-expanded particles increases with an increase of the expansion temperature, but does not disclose in-mold molding of expanded polypropylene resin beads using very low temperature steam.

EP-A-1036814 is aimed at the provision of expanded polypropylene resin beads having good in-mold moldability and discloses expanded polypropylene resin beads which comprises as a base resin a random copolymer obtained by copolymerizing propylene and one, or two or more in admixture of comonomers selected from ethylene and $\alpha$-olefins having four or more carbon atoms by use of a metallocene polymerization catalyst, wherein the base resin is mainly composed of an isotactic polypropylene resin having a melting point exceeding 140°C and a melt flow rate of 12 g/10 minutes or below. The molded articles obtained from the expanded beads have improved heat resistance. However in-mold molding of expanded polypropylene resin beads using very low temperature steam is not disclosed.

SUMMARY OF THE INVENTION

The present invention has been made in view of the above circumstance and has as its object the provision of expanded polypropylene resin beads which can be molded in a mold cavity at a low molding temperature in a stable manner to give a foamed molded article having excellent properties inherent to polypropylene resin foamed moldings such as toughness, heat resistance, performance of incineration and recyclability. It is also an object of the present invention to provide a foamed molded article obtained by molding the expanded polypropylene resin beads in a mold cavity.

With a view toward solving the above problems, the present inventors have made an extensive study on relationship between (i) DSC characteristics of expanded beads as measured by differential scanning calorimetry, (ii) changes in apparent density of expanded beads before and after in-mold molding, (iii) behaviors of expanded beads in a mold cavity and (iv) mechanical properties of foamed molded articles obtained by molding expanded beads in a mold cavity. As a result, it has been found that, by controlling a peak temperature of an endothermic fusion peak observed in a DSC curve obtained by differential scanning calorimetric analysis of expanded polypropylene resin beads as well as a change in apparent density before and after the secondary expansion of the expanded beads in a mold cavity, a foamed molded article having excellent physical properties can be obtained in a stable manner using a reduced molding temperature without adversely affecting the excellent properties inherent to the expanded polypropylene resin beads. The present invention has been completed based on the above finding. It has been also found that expanded beads and a foamed molded article thereof having the above characteristics may be easily obtained when a mixture of two polypropylene resins, which have specific melting point ranges and which differ in melting point by a specific temperature range, is used as a base resin of the expanded beads.

That is, the present invention provides expanded polypropylene resin beads as set forth in below (1) to (4) (hereinafter occasionally referred to as Embodiment-I) and a foamed molded article as set forth in below (5) obtained by molding the expanded polypropylene resin beads in a mold cavity (hereinafter occasionally referred to as Embodiment-II).

(1) Expanded polypropylene resin beads (b) having a resin melting point of not less than 120°C but less than 140°C, said resin melting point being determined from a DSC curve obtained by heat flux differential scanning calorimetry in accordance with JIS K7121-1987 in which a sample of 1 to 3 mg of the expanded polypropylene resin beads (b) is heated to 200°C at a heating rate of 10°C/minute, then cooled to 30°C at a rate of 10°C/minute, and again heated from 30°C to 200°C at a heating rate of 10°C/minute to obtain the DSC curve, said expanded polypropylene resin beads (b) having an apparent density $\rho_1$ before heating and an apparent density $\rho_2$ after being heated for 10 seconds in a closed vessel with saturated steam at a temperature lower by 5°C than the resin melting point, wherein a ratio $\rho_R$ ($=\rho_1/\rho_2$) of the apparent density $\rho_1$ before heating to the apparent density $\rho_2$ after heating is not greater than 1.5, wherein the expanded polypropylene resin beads (b) comprise a polypropylene resin (a) as a base resin, said polypropylene resin (a) being a mixed resin containing 50 to 80% by weight of a polypropylene resin (a1) having a melting point higher than 110°C but not higher than 135°C and 50 to 20% by weight of a polypropylene resin (a2) having a melting point not lower than 125°C but not higher than 140°C with the total amount of the polypropylene resins (a1) and (a2) being 100% by weight, wherein a difference in melting point between the polypropylene resins (a1) and (a2) [(melting point of (a2)) - (melting point of (a1))] is not less than 5°C but less than 15°C and wherein the polypropylene resin (a1) is a polypropylene resin obtained using a metallocene polymerization catalyst.

(2) The expanded polypropylene resin beads (b) as recited in above (1), wherein both the polypropylene resins (a1) and (a2) are a polypropylene resin obtained using a metallocene polymerization catalyst.

(3) The expanded polypropylene resin beads (b) as recited in above (1), wherein at least one of the polypropylene resins (a1) and (a2) has a melt flow rate, as measured in accordance with JIS K7210-1999, Test Condition M (at a temperature of 230°C and a load of 2.16 kg) of 20 g/10 min or more.

(4) The expanded polypropylene resin beads (b) as recited in above (1), wherein the expanded polypropylene resin beads (b) show a plurality of endothermic peaks in a DSC curve obtained by heat flux differential scanning calorimetry in accordance with JIS K7122-1987 in which a sample of 1 to 3 mg of the expanded polypropylene resin beads (b) is heated from ambient temperature to 200°C at a heating rate of 10°C/minute, and wherein the sum of the calorific values of peaks having a peak temperature in the range of from 120°C to 135°C is 50 to 90% of a total calorific value of said plurality of endothermic peaks.

(5) A molded foamed article obtained by molding the expanded polypropylene resin beads (b) according to above (1) in a mold cavity.

The expanded polypropylene resin beads (b) of the Embodiment-I have excellent fusion bonding efficiency and secondary expandability and, therefore, the suitable temperature range for molding the expanded polypropylene resin beads (b) in a mold cavity is broadened toward a low temperature side as compared with the conventional expanded polypropylene resin beads.

Accordingly, the expanded polypropylene resin beads (b) can be molded in a mold cavity at a lower molding temperature (namely using steam having a lower saturation vapor pressure). Therefore, the pressure at which the mold is kept closed may be reduced and the mold can be constructed using a thinner wall. It follows that the molding machine and the mold may be designed to operate under a low pressure environment. Thus, the molding apparatus as a whole can be constructed into a low cost-type. Moreover, a significant reduction of energy costs for the molding operation may be achieved.

Additionally, the expanded polypropylene resin beads (b) of the Embodiment-I may be constituted such that the temperature at which the expanded beads are fusion-bonded together may be made lower than the temperature at which the expanded beads are secondarily expanded. With such expanded beads, fusion bonding of the expanded beads to each other can be followed by the secondary expansion thereof. When the molding of the expanded beads can be carried out in this manner, it is possible to uniformly heat, with steam, the entire expanded beads located not only in a surface region but also in an inside region of a foamed molded article to be produced. Therefore, it is possible to produce a foamed molded article having such a large thickness that could not be easily produced using the conventional expanded polypropylene resin beads. In particular, the present invention makes it possible to produce a thick foamed molded article with a thickness of 100 mm or more which can give, by cutting, sheets or boards free of insufficient fusion bonding between the expanded beads.

The foamed molded article of Embodiment-II obtained by molding the expanded polypropylene resin beads (b) of the Embodiment-I in a mold cavity not only excels in appearance and mechanical properties but also has good dimensional stability because shrinkage and deformation during molding can be suppressed. Therefore, the foamed molded article may be suitably used as a variety of applications. Further, the foamed molded article of Embodiment-II may be imparted with better flexibility as compared with an article prepared from the conventional polypropylene resin expanded beads and, therefore, may be processed into a complicated die-cut product or a bent product.

BRIEF DESCRIPTION OF THE DRAWINGS

Other objects, features and advantages of the present invention will become apparent from the detailed description of the preferred embodiments of the invention which follows, when considered in light of the accompanying drawings, in which:

FIG. 1 is an explanatory view of a first time DSC curve of expanded polypropylene resin beads of the present invention;
FIG. 2 is an explanatory view of a second time DSC curve of the expanded polypropylene resin beads of the present invention;
FIG. 3 shows a first time DSC curve of the expanded polypropylene resin beads obtained in Example 1 of the present invention;
FIG. 4 shows a second time DSC curve of the expanded polypropylene resin beads obtained in Example 1 of the present invention.

DETAILED DESCRIPTION OF THE PREFERRED EMBODIMENTS OF THE INVENTION

In the following description, the expanded polypropylene resin beads of Embodiment-I according to the present invention will be occasionally referred to as "PP beads (b)" for the sake of brevity. The base resin used for producing PP beads (b) will be occasionally referred to as "PP resin (a)". When PP resin (a) is a mixture of two polypropylene resins, one of them having a melting point higher than 110°C but not higher than 135°C will be occasionally referred to as "PP resin (a1), while the other polypropylene resin having a melting point not lower than 125°C but not higher than 140°C will be occasionally referred to as "PP resin (a2)". The foamed molded article obtained by molding PP beads (b) in a mold cavity will be occasionally referred to as "PP bead molding (c)".

[1] Embodiment-I (PP beads (b))

It is important that PP beads (b) according to Embodiment-I have a resin melting point of not less than 120°C but less than 140°C. The resin melting point is determined from a DSC curve obtained by heat flux differential scanning calorimetry in accordance with JIS K7121-1987 in which 1 to 3 mg of a sample of PP beads (b) is heated to 200°C at a heating rate of 10°C/minute, then cooled to 30°C at a rate of 10°C/minute, and again heated from 30°C to 200°C at a heating rate of 10°C/minute to obtain the DSC curve. It is also important that PP beads (b) have a ratio $\rho_R$ (=$\rho_1$ / $\rho_2$) (where $\rho_1$ represents an apparent density thereof before heating and $\rho_2$ represents an apparent density thereof after being heated for 10 seconds in a closed vessel with saturated steam at a temperature lower by 5°C than the resin melting point) of not greater than 1.5.

PP resin (a) used as a base resin of PP beads (b) is not specifically limited with respect to the composition thereof and process for the production thereof as long as it contains propylene as its main monomer component. Examples of PP resin (a) include propylene homopolymers, propylene random copolymers, propylene block copolymers, propylene graft copolymers and mixtures thereof. Details of PP resin (a) will be described hereinafter.

(1) PP beads (b)

(1-1) Resin melting point of PP beads (b) determined from DSC curve

PP beads (b) have a resin melting point of not less than 120°C but less than 140°C. The resin melting point is determined from a DSC curve obtained by heat flux differential scanning calorimetry in accordance with JIS K7121-1987 in which a sample of 1 to 3 mg of PP beads (b) is heated to 200°C at a heating rate of 10°C/minute (first heating), then cooled to 30°C at a rate of 10°C/minute, and again heated from 30°C to 200°C at a heating rate of 10°C/minute (second heating) to obtain the DSC curve (hereinafter occasionally referred to as "second time DSC curve").

The resin melting point of PP beads (b) governs major physical properties which have an influence upon in-mold moldability thereof. When PP beads (b) are made of two kinds of polypropylene resins with different melting points, a plurality of endothermic peaks attributed to fusion thereof may be observed in the second time DSC curve. In such a case, the peak temperature of the fusion peak located on the highest temperature side in the DSC curve may govern major physical properties which have an influence upon in-mold moldability of the PP beads (b).

Further, the term "a peak temperature of a fusion peak" in the present specification is intended to refer to a peak top temperature of the fusion peak.

A DSC curve (hereinafter occasionally referred to as "first time DSC curve") may be obtained when a sample of PP beads (b) is first heated from ambient temperature to 200°C at a heating rate of 10°C/minute in the above-mentioned heat flux differential scanning calorimetry. There is a case where the first time DSC curve shows not only a main, intrinsic endothermic peak attributed to the fusion of the resin but also a high temperature endothermic peak located at a higher temperature side of the main endothermic peak and attributed to the fusion of secondary crystals. It is preferred that such an endothermic peak attributed to the secondary crystals has a specific range of calorific value as described hereinafter for reasons of desired mechanical properties of a foamed molded article obtained from the PP beads (b). Incidentally, in Embodiment-I of the present invention, the resin melting point of PP beads (b) which governs the main physical properties required in in-mold molding step is determined from the second time DSC curve in order to obtain the precise melting point by eliminating an influence of the secondary crystals. In the present specification, the ambient temperature is intended to refer to about 25°C.

The resin melting point of PP beads (b) is determined by the method specified in JIS K7121-1987 in which a sample of 1 to 3 mg of PP beads (b) (which may be made of only one PP resin (a) or a mixture of two or more PP resins) is subjected to heat flux differential scanning calorimetry. Thus, the sample is first heated from ambient temperature to 200°C at a heating rate of 10°C/minute. The melted sample is then cooled to 30°C at a rate of 10°C/minute so that secondary crystallization is prevented from proceeding. The obtained solid having no or an extremely small degree of secondary crystallization is then heated again from 30°C to 200°C (above melt completion temperature) at a heating rate of 10°C/minute to obtain the second time DSC curve from which the melting point is determined.

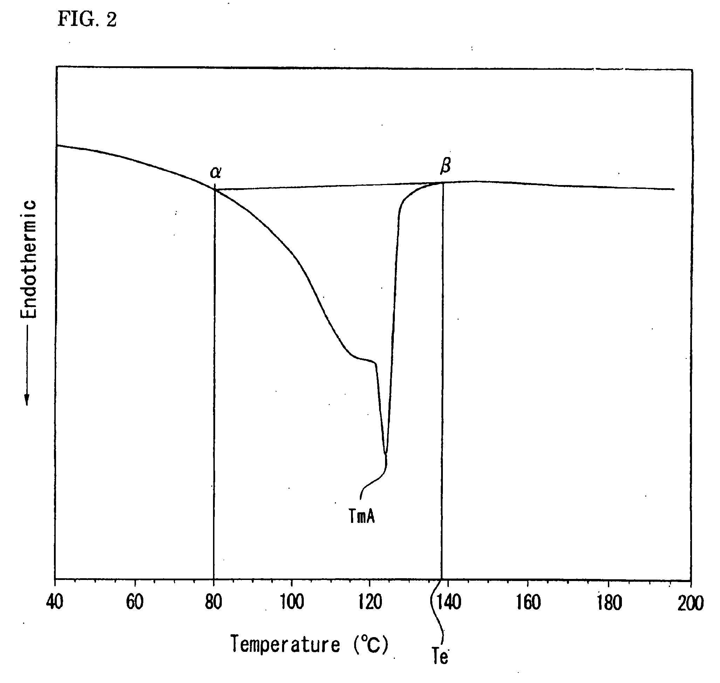

In the second time DSC curve, one or a plurality of endothermic peaks attributed to fusion of polymer crystals are present. When only one endothermic peak is present, the peak temperature of the endothermic peak is the resin melting point (TmA) of PP beads (b). When two or more endothermic peaks are present, the calorific value of each of the endothermic peaks is determined by the partial area analyzing method described below. From the obtained results, the resin melting point is determined. Namely, the resin melting point (TmA) of PP beads (b) is the peak temperature of the endothermic peak having the highest peak temperature among those endothermic peaks which have a calorific value of 4 J/g or more (see FIG. 2). The resin melting point of PP beads (b) may be determined by the DSC analysis using, in lieu of a sample of PP beads (b), a sample obtained from a foamed molded article produced from PP beads (b) or a sample of the polypropylene resin (base resin) from which PP beads are made.

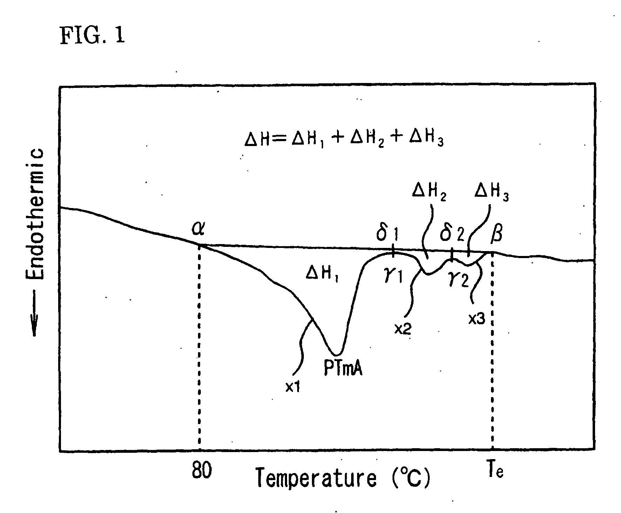

The partial area analyzing method will be explained below with reference to a DSC curve of FIG. 1. In the illustrated case, the DSC curve has three endothermic peaks. At the outset, a straight line ($\alpha$-$\beta$) extending between the point $\alpha$ on the curve at 80°C and the point $\beta$ on the curve at a melt completion temperature Te of the resin is drawn. Next, a line which is parallel with the ordinate and which passes through a point $Y_1$ in the curve at the bottom of the valley between the lowermost temperature endothermic peak $x_1$ and the neighboring endothermic peak $x_2$ is drawn. This line crosses the line ($\alpha$-$\beta$) at a point $\delta_1$. Similarly, a line which is parallel with the ordinate and which passes a point $\gamma_2$ in the curve at the bottom of the valley between the endothermic peak $x_2$ and the neighboring endothermic peak $x_3$ is drawn. This line crosses the line ($\alpha$-$\beta$) at a point $\delta_2$.

If additional endothermic peaks $x_4$, $x_5$, $x_6$··· are present, similar procedures are carried out. The thus obtained line segments ($\delta_n$-$\gamma_n$), where n is an integer of 1 or more, define boundaries between two neighboring endothermic peaks $x_{n-1}$ and $x_n$ (n is as defined above). Thus, the area of the endothermic peak $x_1$ is an area defined by the DSC curve of the endothermic peak $x_1$, the line segment ($\delta_1$-$\gamma_1$) and the line segment ($\alpha$-$\delta_1$) and corresponds to the calorific value (amount of endotherm $\Delta H1$) of the endothermic peak $X_1$. The area of the endothermic peak $X_2$ is an area defined by the DSC curve of the endothermic peak $X_2$, the line segment ($\delta_1$-$\gamma_1$), the line segment ($\delta_2$--$\gamma_2$) and the line segment ($\delta_1$-$\delta_2$) and corresponds to the calorific value (amount of endotherm $\Delta H2$) of the endothermic peak $X_2$. The area of the endothermic peak $X_3$ is an area defined by the DSC curve of the endothermic peak $X_3$, the line segment ($\delta_2$-$\gamma_2$) and the line segment ($\delta_2$-$\beta$) and corresponds to the calorific value (amount of endotherm $\Delta H3$) of the endothermic peak $X_3$. If there are additional endothermic peaks $X_4$, $X_5$, $X_6$···, the calorific values thereof may be determined in the same manner as above. Thus, from the given DSC curve, the calorific values ($\Delta H1$, $\Delta H2$, $\Delta H3$ ···) of respective endothermic peaks may be determined.

The calorific values ($\Delta H1$, $\Delta H2$, $\Delta H3$ ···) may be automatically computed by the differential scanning calorimeter on the basis of the peak areas.

The total calorific value $\Delta H$ of the resin is the sum of the calorific values of the endothermic peaks ($\Delta H = \Delta H1 + \Delta H2 + \Delta H3$ ···). In the above partial area analyzing method, the position on the DSC curve at 80°C is used as the point $\alpha$, because the base line extending between such a point $\alpha$ and the point $\beta$ at the melt completion temperature Te has been found to be best suited to determine the calorific value of each of the endothermic peaks with high reliance and reproducibility in a stable manner. The above-described partial area analyzing method may be also adopted for the determination of calorific values of peaks in the first time DSC curve as described hereinafter.

When the resin melting point of PP beads (b), as determined from the second time DSC curve, is not less than 120°C but less than 140°C, the suitable temperature range for molding PP beads (b) in a mold cavity can be broadened toward a low temperature side without adversely affecting the excellent physical properties of PP beads.

That is, PP beads (b) having the above specific resin melting point (TmA) permit the use of a low heating temperature (use of steam with a low saturation vapor pressure). Therefore, the pressure at which the mold is kept closed may be reduced and the molding machine and the mold may be designed to operate under a low pressure environment. Further, a significant reduction of energy costs for the molding operation may be achieved as compared with the conventional expanded polypropylene resin beads.

(1-2) Ratio $\rho_R$ of apparent densities before and after heating of PP beads (b)

It is important that PP beads (b) of Embodiment-I have an apparent density ratio $\rho_R$ of not greater than 1.5. The apparent density ratio $\rho_R$ ($=\rho_1/\rho_2$) herein is a ratio of the apparent density $\rho_1$ of PP beads (b) before heating to the apparent density $\rho_2$ thereof after being heated for 10 seconds in a closed vessel with saturated steam at a temperature lower by 5°C than the resin melting point. The lower limit of the apparent density ratio ($\rho_R$) is preferably 1.3 for reasons of excellent appearance and excellent fusion bonding between expanded beads of PP bead molding (c) obtained from PP beads (b).

The apparent density ratio $\rho_R$ is determined by measuring the densities of PP beads (b) before and after the heating as follows.

(i) Measurement of apparent density $\rho_1$ of PP beads (b) before heating

In a measuring cylinder containing water at 23°C, about 500 mL (weight W1) of PP beads (b) which have been allowed to stand at 23°C and 1 atm under 50 % relative humidity for 48 hours are immersed using a wire net. From a rise of the water level, the apparent volume V1 (L) is determined. The apparent density is obtained by dividing the weight W1 (g) of PP beads (b) by the apparent volume V1 (L) ($\rho_1$ = W1/V1).

(ii) Measurement of apparent density $\rho_2$ of PP beads (b) after heating

PP beads (b) are charged in a closed pressure resisting vessel and heated for 10 seconds with saturated steam at a temperature lower by 5°C than the resin melting point (TmA). The vessel is then opened to atmospheric pressure and is cooled with water. Then heat-treated PP beads (b) are taken out of the vessel, dried in an oven at 60°C for 12 hours and pressurized with air at 0.2 MPa(G) for 12 hours. In a measuring cylinder containing water at 23°C, about 500 mL (weight W2) of heat treated PP beads (b) are immersed using a wire net. From a rise of the water level, the apparent volume V2 (L) is determined.
The apparent density after heating is obtained by dividing the weight W2 (g) of PP beads (b) by the apparent volume V2 (L) ($\rho_2$ = W2/V2).

(iii) Apparent density ratio $\rho_R$

The apparent density ratio $\rho_R$ is obtained from thy following equation:

$$\rho_R = \rho_1 / \rho_2$$

The expanded beads may be classified into two types; first, those which start fusion bonding before secondary expansion when heated in a mold cavity and, second, those which start secondary expansion before fusion bonding. In the case of the second type expanded beads, in which fusion bonding is preceded by the secondary expansion, the spaces between expanded beads placed in the mold cavity tend to narrow and decrease by the expansion thereof before fusion bonding proceeds sufficiently. As a result, a heating medium (steam) is prevented from uniformly flowing and passing through the spaces between expanded beads. Thus, the expanded beads are not uniformly heated and fusion-bonded together. On the other hand, in the first type expanded beads, in which secondary expansion is preceded by the fusion bonding, no such narrowing and decreasing of the spaces between the expanded beads occur before fusion bonding proceeds sufficiently, so that the entire expanded beads can be uniformly heated with steam. The conventional expanded polypropylene resin beads are of the second type.
In the measurement of the apparent density $\rho_2$ of PP beads (b) after heating, PP beads (b) are heated at a temperature lower by 5°C than the resin melting point (TmA) thereof. The reason for using this temperature is that in-mold molding of expanded beads is generally carried out at a temperature lower by 5°C than the resin melting point thereof.
Conventional expanded polypropylene resin beads have an apparent density ratio $\rho_R$ of above 1.5 and relatively high expansion power. Thus, the conventional expanded beads are of the second type in which the secondary expansion occurs first. PP beads (b) of the present invention having an apparent density ratio $\rho_R$ of not greater than 1.5 are of the first type in which the fusion bonding starts occurring first when molded in a mold cavity. Therefore, the suitable temperature range for molding PP beads (b) in a mold cavity can be broadened toward a low temperature side. Additionally, the conditions under which the in-mold molding is carried out may be improved and foamed molded articles having excellent appearance and mechanical properties may be obtained. A preferred method for producing PP beads (b) of the first type in which the fusion bonding occurs first will be described hereinafter.
In in-mold molding of expanded beads, various treatments such as press filling of the expanded beads in a mold cavity and increase of inside pressure of the expanded beads may be adopted to improve the secondary expandability of the expanded beads. However when such a treatment is carried out for expanded beads having an apparent density ratio $\rho_R$ of greater than 1.5, the resulting expanded beads more easily undergo secondary expansion before fusion bonding.
PP beads (b) generally have an apparent density of 10 to 500 g/L. From the viewpoint of basic properties of foamed molded articles such as lightness in weight and cushioning property, the apparent density of PP beads (b) is preferably 300 g/L or less, more preferably 180 g/L or less. For reasons of freedom or absence of cell breakage, the apparent density of PP beads (b) is preferably 12 g/L or more, more preferably 15 g/L or more.

(2) PP resin (a)

PP resin (a) used as a base resin of PP beads (b) is not specifically limited with respect to the composition thereof and process for the production thereof. Specific examples of PP resin (a) include propylene homopolymers, ethylene-propylene block copolymers, ethylene-propylene random copolymers, propylene-butene random copolymers, propylene-butene block copolymers and ethylene-propylene-butene terpolymers. A mixture of two or more different resins mentioned above may be used as PP resin (a).

Details of PP resin (a) are as follows.

(2-1) Monomer component

PP resin (a) constituting PP beads (b) may be a propylene-based resin obtained by polymerizing a propylene monomer as a main raw material. Any propylene-based resin, such as propylene homopolymers, propylene random copolymers, propylene block copolymers and propylene graft copolymers and mixtures thereof, may be used as PP resin (a), as long as PP beads (b) obtained therefrom have a resin melting point, as determined from its second time DSC curve, of not less than 120°C but less than 140°C. The above-mentioned propylene-based copolymer is a copolymer of propylene with one or more copolymerizable comonomers such as ethylene and α-olefins having 4 to 20 carbon atoms such as 1-butene, 1-pentene, 1-hexene, 1-octene and 4-methyl-1-butene.

The propylene-based copolymer may be a two-component copolymer such as a propylene-ethylene random copolymer and a propylene-butene random terpolymer or a three-component copolymer such as a propylene-ethylene-butene random copolymer. Two or more mixed resins may be used as PP resin (a), as long as PP beads (b) obtained therefrom have a resin melting point, as determined from its second time DSC curve, of not less than 120°C but less than 140°C.

The proportion of the comonomer in the propylene-based copolymer is not specifically limited. Generally, however, the propylene-based copolymer has a content of structural units derived from propylene of 70% by weight or more, preferably 80 to 99.5% by weight and a content of structural units derived from ethylene and/or α-olefins having 4 to 20 carbon atoms of less than 30% by weight, preferably 0.5 to 20% by weight.

(2-2) Polymerization catalyst

A polymerization catalyst used for producing PP resin (a) is not specifically limited. An organometallic complex having polymerization catalytic activity may be suitably used. For example, there may be mentioned (i) an organometallic complex, called Ziegler Natta catalyst, containing titanium, aluminum and magnesium as active metals modified in at least partially with an alkyl group, (ii) an organometallic complex, called a metallocene polymerization catalyst or homogeneous catalyst containing a transition metal, such as zirconium, titanium, thorium, lutetium, lanthanum and iron, or boron as a metal center and a ligand such as a cyclopentane ring, or (iii) a combination of the organometallic complex and methyl alumoxan.

A metallocene polymerization catalyst can copolymerize propylene with a comonomer which is difficult to be copolymerized using a conventional Ziegler-Natta catalyst to give a propylene-based copolymer which can be used as PP resin (a). Examples of such a comonomer include cyclic olefins, such as cyclopentene, norbornene and 1,4,5,8-dimethano-1,2,3,4,4a,8,8a,6-octahydronaphthalene, non-conjugated dienes, such as 5-methyl-1,4-hexadiene and 7-methyl-6-octadiene, and aromatic unsaturated compounds such as styrene and divinyl benzene. These comonomers may be used singly or in combination of two or more thereof.

A polypropylene resin produced using a metallocene polymerization catalyst, in particular azulenyl-type catalyst, generally has a lower melting point than that produced using a conventional Ziegler Natta polymerization catalyst, because of the presence of position irregular units attributed to 2,1-insertion and 1,3-insertion of propylene monomer in the total propylene insertion as determined from [13]NMR spectrum (see, for example, Japanese Laid-Open Patent Publication No. JP-2003-327740-A) and may be used for the purpose of the present invention.

(2-3) PP resin (a) of mixed resin

(i) PP resin (a) including two or more kinds of resins

PP resin (a) as a base resin of PP beads (b) may be a mixed resin containing two or more polypropylene resins. From the standpoint of practical use, the use of two or more polypropylene resins as a mixture is preferable. In this case, it is preferred that PP resin (a) be comprised of 50 to 80% by weight of PP resin (a1) having a melting point higher than 110°C but not higher than 135°C and 50 to 20% by weight of PP resin (a2) having a melting point not lower than 125°C but not higher than 140°C with the total amount of PP resins (a1) and (a2) being 100% by weight and that a difference in melting point between PP resins (a1) and (a2) [(melting point of (a2)) - (melting point of (a1))] be not less than 5°C but less than 15°C. When two PP resins (a1) and (a2) are used in combination as PP resin (a), the PP resin (a) may additionally contain one or more resins (inclusive of polypropylene resin or resins) other than PP resins (a1) and (a2) as long as the objects and effects of the present invention are not adversely affected.

PP resin (a1), which has a relatively low melting point (higher than 110°C but not higher than 135°C), serves to lower the melt initiation temperature of PP beads (b) at the time of in-mold molding and to broaden the suitable temperature range for in-mold molding of PP beads (b) toward a low temperature side. In other words, PP resin (a1) serves to improve the fusion bonding efficiency of PP beads (b). On the other hand, PP resin (a2), which has a higher melting point than that of PP resin (a1) (not lower than 125°C but not higher than 140°C), serves to improve the dimensional stability and heat resistance of PP beads (b) at the time of in-mold molding (and, therefore, dimensional stability and heat resistance of PP bead molding (c) obtained therefrom).

The use of PP resin (a1) having a melting point higher than 110°C but not higher than 135°C and PP resin (a2) having a melting point not lower than 125°C but not higher than 140°C as PP resin (a) is also preferred, because PP beads (b) made of such PP resin (a) can easily achieve the requirement that the resin melting point of PP beads (b) as determined from the second time DSC curve thereof must be not less than 120°C but less than 140°C.

It is preferred that the difference in melting point between PP resins (a1) and (a2) [(melting point of (a2)) - (melting point of (a1))] be not less than 5°C but less than 15°C because of the following reasons. When the difference is not less than 5°C, the suitable temperature range for in-mold molding of PP beads (b) can be more broaden toward a low temperature side. When difference is less than 15°C, the compatibility between PP resins (a1) and (a2) can be maintained good and, additionally, good secondary expandability of PP beads (b) can be achieved. When the difference is 15°C or more, a uniform mixture of PP resins (a1) and (a2) is not easily obtainable by ordinary kneading procedures. Further, there is a possibility that the effect of suppressing premature secondary expansion at the time of in-mold molding is so large that a foamed molded article obtained lacks surface smoothness.

(ii) Method of measuring melting point

The melting points of PP resins (a1) and (a2) are measured by differential scanning calorimetry in accordance with JIS K7121-1987 in which a sample of 1 to 3 mg of the PP resin is heated to 200°C at a heating rate of 10°C/minute, then immediately cooled to 30°C at a rate of 10°C/minute, and again heated from 30°C to 200°C at a heating rate of 10°C/minute to obtain a DSC curve. A peak temperature of the endothermic peak in the DSC curve is the melting point. When a plurality of endothermic peaks are present, a peak temperature of the endothermic peak having the largest peak area of all is the melting point.

(iii) Preparation of PP resins (a1) and (a2)

PP resins (a1) and (a2) may be each prepared as a propylene homopolymer or a copolymer of propylene with one or more copolymerizable comonomers such as ethylene and $\alpha$-olefins having 4 to 20 carbon atoms.

As the comonomer used for the production of PP resins (a1) and (a2), there may be mentioned, for example, ethylene, 1-butene, 1-pentene, 1-hexene, 1-octene and 4-methyl-1-butene. Specific examples of PP resins (a1) and (a2) include propylene-ethylene random copolymers, propylene-butene-1 random copolymers and propylene-ethylene-butene-1 random terpolymers. The proportion of the comonomer in PP resins (a1) and (a2) is properly selected in consideration of the desired resin melting point and mechanical strength of PP beads (b). The preferred proportion of the comonomer in PP resins (a1) and (a2) also varies depending upon the catalyst such as Ziegler-Natta catalyst and metallocene polymerization catalyst used for the production of PP resins (a1) and (a2).

The proportion of each of the monomer components used for copolymerization varies with the type of combination of PP resins (a1) and (a2). When, for instance, a metallocene polymerization catalyst is used, the proportion of each of the monomer components is such that the content of ethylene units or/and $C_4$ to $C_{20}$ $\alpha$-olefin units in PP resin (a2) is preferably 0.5 to 8% by weight, more preferably 1.0 to 7% by weight, while the content of ethylene units or/and $C_4$ to $C_{20}$ $\alpha$-olefin units in PP resin (a1) is preferably about 1.5 to 4 times the amount of the ethylene units or/and $C_4$ to $C_{20}$ $\alpha$-olefin units in PP resin (a2).

As PP resin (a1), which has a melting point of higher than 110°C but not higher than 135°C, it is preferable to use a propylene-ethylene random copolymer, a propylene-butene-1 random copolymer or a propylene-ethylene-butene-1 random terpolymer each of which is obtained by copolymerizing propylene with a comonomer using a metallocene catalyst, since such a copolymer has excellent compatibility weigh PP resin (a2) having a melting point not lower than 125°C but not higher than 140°C.

It is preferred that at least one of PP resins (a1) and (a2) be a polypropylene resin obtained using a metallocene polymerization catalyst, since PP resin (a) containing such PP resins (a1) and (a2) has relatively a low melting point.

Notwithstanding a reduced melting point, PP resins obtained using a metallocene polymerization catalyst are able to have mechanical properties which are almost not reduced. Further, it is preferred that PP resin (a) contain 50 to 80% by weight of PP resin (a1) and 50 to 20% by weight of PP resin (a2)

with the total amount of both being 100% by weight, since PP beads (b) made of such a mixed resin have both good fusion bonding efficiency and secondary expandability.

When the content of PP resin (a1) in PP resin (a) is 50% by weight or more, the suitable temperature range for molding PP beads (b) in a mold cavity can be more broadened toward a low temperature side. A content of PP resin (a1) in PP resin (a) of not more than 80% by weight can give PP bead molding (c) having better appearance and mechanical properties.

(2-4) Other polymers

PP resin (a) (inclusive of a mixture of PP resins (a1) and (a2)) which is used as a base resin of PP beads (b) may contain other polymers and/or additives as long as the effects of the present invention are not adversely affected.

Examples of the additional polymers include polyethylene resins such as high density polyethylenes, medium density polyethylenes, low density polyethylenes, linear low density polyethylenes, linear very low density polyethylenes, ethylene-vinyl acetate copolymers, ethylene-acrylic acid copolymers and ethylene-methacrylic copolymers; polystyrene resins such as polystyrene and styrene-maleic anhydride copolymers; rubbers such as ethylene-propylene rubber, ethylene-1-butene rubber, propylene-1-butene rubber, ethylene-propylene-diene rubber, isoprene rubber, neoprene rubber and nitrile rubber; and styrenic thermoplastic elastomers such as styrene-diene block copolymers and hydrogenated products of the styrene-diene block copolymers.

The above additional resins, rubbers and elastomers may be used singly or in combination of two or more thereof. The amount of the additional polymers is preferably 20 parts by weight or less, more preferably 10 parts by weight or less, per 100 parts by weight of PP resin (a).

The base resin of PP beads (b) may be either cross-linked or non-cross-linked. From the standpoint of recyclability and productivity of PP beads (b), however, the use of non-cross-linked polypropylene resin is preferred.

(2-5) Additives

If desired, one or more additives, such as a cell diameter controlling agent, an antistatic agent, an electrical conductivity imparting agent, a lubricant, an antioxidant, a UV absorbing agent, a flame retardant, a metal-deactivator, a pigment, a dye, a nucleus agent and an inorganic filler, may be incorporated into PP resin (a). Examples of the cell diameter controlling agent include inorganic powders such as talc, calcium carbonate, silica, titanium oxide, gypsum, zeolite, borax, aluminum hydroxide and carbon black and organic nucleus agents such as phosphorus-based, phenol-based and amine-based nucleus agents. The amount of the additive varies with the object of incorporation but is generally 25 parts by weight or less, preferably 15 parts by weight or less, more preferably 8 parts by weight or less, particularly preferably 5 parts by weight or less, per 100 parts by weight of the base resin.

(2-6) Method of kneading PP resins (a1) and (a2)

A base resin containing PP resins (a1) and (a2) is kneaded together with optional ingredients such as other optional resins and/or additives into a homogeneous mixture. The kneading is carried out at a temperature sufficient to melt the resin components using a single screw extruder or multi-screw extruder such as a twinscrew extruder. In this case, the extruder may be operated in a starvation mode, if desired, in order to uniformly knead a plurality of resins having different melting points or melt viscosities as described in Japanese Laid-Open Patent Publication No. JP-2006-69143-A. In the starvation mode operation, a feed rate of the raw material resin is adjusted by a volumetric feeder such that the discharge amount of the product is less than that in the flooded state when the screw speed is held constant. The discharge amount in the starved state is preferably 60 to 80% of that of the flooded state.

(2-7) Melt flow rate (MFR) of PP resins (a1) and (a2)

When a mixture of PP resins (a1) and (a2) is used as PP resin (a), it is preferred that at least one of PP resins (a1) and (a2) have a melt flow rate, as measured in accordance with JIS K7210-1999, Test Condition M (at a temperature of 230°C and a load of 2.16 kg) of 20 g/10 min or more. Such PP resin (a) can easily give PP beads (b) in one stage expansion. The obtained PP beads (b) can be fusion-bonded to each other with high fusion bonding strength even when molded in a mold cavity at a low molding temperature.

(3) Production of PP beads (b)

The PP resin (a) and, if desired, one or more additives and additional polymers are pelletized by any suitable known method to obtain resin particles. For example, they are melted and kneaded in an extruder and extruded through a die into strands and cut to obtain the resin particles or pellets. The resin particles (and PP beads (b) as well) generally have a mean weight per particle (per bead) of 0.01 to 10.0 mg, preferably 0.1 to 5.0 mg.

The obtained resin particles are then expanded using a blowing agent to obtain PP beads (b) by any known method disclosed in, for example, Japanese Patent Publications No. JP-S49-2183-B, No. JP-S56-1344-B and JP-S62-61227-B. For example, PP beads (b) may be suitably prepared by a dispersion method in which the resin particles are dispersed in a dispersing medium, such as water, in an autoclave together with a physical blowing agent. The resulting dispersion is heated with stirring to soften the resin particles and to impregnate the resin particles with the blowing agent and then discharged from the autoclave into a lower pressure atmosphere, generally atmospheric pressure, to foam and expand the resin particles and to obtain PP beads (b). When the dispersion is discharged to a low pressure atmosphere, it is preferred that a back pressure be applied to the autoclave using the blowing agent or an inorganic gas such as nitrogen or air to prevent the pressure inside the autoclave from being quickly reduced. This procedure is effective to produce PP beads (b) having a uniform apparent density.

The PP beads (b) discharged into the low pressure atmosphere are aged in the atmosphere. If desired, the PP beads (b) may be treated with a pressurized gas such as air in a closed vessel to increase the pressure inside the cells thereof to 0.01 to 0.6 MPa(G). The treated PP beads (b) are taken out of the closed vessel and then heated with steam or hot air to reduce the apparent density thereof. The above treatment to reduce the apparent density will be hereinafter occasionally referred to as "second stage expansion".

(3-1) Blowing agent

The blowing agent used in the above dispersion method may be an organic physical blowing agent, an inorganic physical blowing agent or a mixture thereof. Examples of the organic physical blowing agent include aliphatic hydrocarbons such as propane, butane, pentane, hexane and heptane, alicyclic hydrocarbons such as cyclobutane and cyclohexane, halogenated hydrocarbons such as chlorofluoromethane, trifluoromethane, 1,1,1,2-tetrafluoroethane, methyl chloride, ethyl chloride and methylene chloride, and dialkyl ethers such as dimethyl ether, diethyl ether and methyl ethyl ether. Examples of the inorganic physical blowing agent include nitrogen, carbon dioxide, argon, air and water. These blowing agents may be used singly or in combination of two or more thereof. When the organic physical blowing agent and inorganic physical blowing agent are used in combination, the above-exemplified organic and inorganic physical blowing agents may be arbitrarily selected and combined. In this case, it is preferred that the inorganic physical blowing agent is used in an amount of 30% by weight or more based on the total amount of the organic and inorganic physical blowing agents.

From the standpoint of environmental problem, the use of an inorganic blowing agent, particularly nitrogen, air, carbon dioxide or water is preferred. When water is used as a dispersing medium for dispersing the resin particles for the production of PP beads (b) by the above-described dispersion method, the water may be also used as a blowing agent. In this case, a water absorbing resin may be suitably incorporated into the base resin of the resin particles. The amount of the blowing agent is suitably determined in consideration of the intended expansion ratio (apparent density) of the expanded beads, kind of the base resin and the kind of the blowing agent. The organic and inorganic physical blowing agents are generally used in amounts of 5 to 50 parts by weight and 0.5 to 30 parts by weight, respectively, per 100 parts by weight of the resin particles.

(3-2) Dispersing medium and dispersing agent

Any liquid in which the resin particles are insoluble may be used as the dispersing medium. Examples of the dispersing medium include water, ethylene glycol, glycerin, methanol, ethanol and mixtures thereof. The dispersing medium is preferably water or an aqueous dispersing medium.

A dispersing agent of a water insoluble or sparingly water insoluble inorganic substance such as aluminum oxide, tribasic calcium phosphate, magnesium pyrophosphate, zinc oxide and kaolin, and a dispersing aid of an anionic surfactant such as sodium dodecylbenzenesulfonate and sodium alkanesulfonate may be suitably incorporated in the dispersing medium. The amount of the dispersing agent is preferably such that a weight ratio of the resin particles to the dispersing agent is in the range of 20 to 2,000, particularly 30 to 1,000. The amount of the dispersing aid is such that a weight ratio of the dispersing agent to the dispersing aid is 0.1 to 500, particularly 1 to 50.

(3-3) Production of PP beads (b) by isothermal crystallization

It is preferred that an isothermal crystallization treatment be carried out during the course of the production of PP beads (b) so that PP beads (b) gives a first time DSC curve which satisfies the following two conditions; i.e. (1) the first time DSC curve has a plurality of endothermic peaks, and (2) the sum of the calorific values of the endothermic peak or peaks having a peak temperature of between 120°C and 135°C is 50 to 90% of the total calorific value of the plurality of endothermic peaks. PP beads (b) satisfying the above conditions may afford PP bead molding (c) having excellent physical properties. The isothermal crystallization treatment can form secondary crystals which account for the endothermic peak or peaks which are present on a high temperature side of the intrinsic endothermic peak in the first time DSC curve of PP beads (b).

In the isothermal crystallization treatment, the dispersion in a closed vessel containing the resin particles is held at an arbitrary temperature (Ta) between a temperature lower by 15°C than the melting point (Tm) of PP resin (a) and a temperature lower than the melt completion point of the resin particles (Te) for a period of time sufficient to grow secondary crystals, preferably 5 to 60 minutes. After controlling the temperature of the dispersion to a temperature (Tb) which is between (Tm - 5°C) and (Te + 5°C), the dispersion is discharged from the vessel to a low pressure atmosphere to foam and expand the resin particles.

The temperature (Ta) at which the dispersion is held in the isothermal crystallization step may be increased stepwise or continuously between (Tm - 15°C) and Te to grow the secondary crystals.

The melting point (Tm) of PP resin (a) used as a base resin of PP beads (b), the resin melting point (TmA) of PP beads (b) as determined from the second time DSC curve, and the peak temperature (PTmA) of the intrinsic endothermic peak which is present on a low temperature side in the first time DSC curve (described hereinafter) are close to each other. Therefore, from TmA or PTmA, the melting point (Tm) of PP resin (a) may be well estimated.

Similar to the above-described resin melting point (TmA), the melting point (Tm) of PP resin (a) may be determined from a DSC curve obtained by heat flux differential scanning calorimetry in accordance with JIS K7121-1987 in which a sample of 1 to 3 mg of PP resin (a) is heated to 200°C at a heating rate of 10°C/minute, then immediately cooled from 200°C to 30°C at a rate of 10°C/minute, and again heated from 30°C to 200°C at a heating rate of 10°C/minute to obtain the DSC curve. The melting point is a peak temperature of the endothermic peak in the DSC curve. When there are a plurality of endothermic peaks, the melting point is a peak temperature of the endothermic peak having the largest peak area.

The formation of secondary crystals and the calorific value of the endothermic peak attributed to the fusion of the secondary crystals mainly depend upon the afore-mentioned temperature Ta at which the dispersion is maintained before expansion treatment, the length of time for which the dispersion is maintained at the temperature Ta, the afore-mentioned temperature Tb, and the heating rate at which the dispersion is heated within the range of (Tm - 15°C) and (Te + 5°C). The calorific value of the endothermic peak attributed to the fusion of the second crystals increases (i) as temperatures Ta and Tb are lowered within the above-specified ranges, (ii) as the holding time in the range of between (Tm - 15°C) and Te increases, and (iii) as the heating rate in the temperature range of between (Tm - 15°C) and Te decreases. The heating rate is generally 0.5 to 5°C per minute.

The calorific value of the endothermic peak attributed to the fusion of the second crystals decreases (i) as temperatures Ta and Tb increase within the above-specified ranges, (ii) as the holding time in the range of between(Tm - 15°C) and Te decreases, (iii) as the heating rate in the temperature range of between (Tm - 15°C) and Te increases and (iv) as the heating rate in the temperature range of between Te and (Te + 5°C) decreases. Suitable conditions for the preparation of PP beads (b) having desired heat of fusion of the endothermic peak attributed to the fusion of the secondary crystals can be determined by preliminary experiments on the basis of the above points.

The above temperature range for the formation of the endothermic peak attributed to the fusion of the secondary crystals are suitably adopted in the case where an inorganic physical blowing agent is used. When an organic physical blowing agent is used, the suitable temperature range will shift toward the low temperature side (lower by 0 to 30°C) and vary with the kind and amount of the organic physical blowing agent.

(3-4) Calorific value of endothermic peak in first time DSC curve of PP beads (b)

The total calorific value ΔH of the endothermic peak or peaks of the first time DSC curve of PP beads (b) is determined as follows.

FIG. 1 is an explanatory view of a first time DSC curve of expanded beads. A straight line (α-β) extending between the point α on the curve at 80°C and the point β on the curve at a melt completion temperature Te of the resin is drawn. The area defined by the DSC curve and the line (α-β) corresponds to the total calorific value ΔH J/g. The total calorific value ΔH may be automatically computed by a differential scanning calorimeter on the basis of the peak area.

The total calorific value ΔH of PP beads (b) is preferably in the range of 40 to 120 J/g, more preferably 45 to 100 J/g, particularly preferably 45 to 85 J/g.

The calorific values ΔH1, ΔH2, ΔH3 ⋯ of endothermic peaks $x_1$, $x_2$, $x_3$ ... may be determined by the partial area analysis as described previously.

It is preferred that PP beads (b) give such a first time DSC curve in which a plurality of endothermic peaks are present and the sum of the calorific values of the endothermic peak or peaks having a peak temperature of not lower than 120°C but not higher than 135°C is 50 to 90% of the total calorific value of the plurality of endothermic peaks, since the secondary expandability of PP beads (b) is excellent and PP bead molding obtained therefrom has excellent mechanical strength and heat resistance. The first time DSC curve is obtained by heat flux differential scanning calorimetry in accordance with JIS K7122-1987 in which a sample of 1 to 3 mg of the PP beads (b) is heated from ambient temperature to 200°C at a heating rate of 10°C/minute. In the first time DSC curve having a plurality of endothermic peaks, the number of the endothermic peak having a peak temperature of not lower than 120°C but not higher than 135°C may be only one or may be two or more. FIG. 1 is an explanatory view of a first time DSC curve of expanded beads in which the endothermic peak $x_1$ having a peak temperature PTmA is the only peak that is present in the temperature range of not lower than 120°C but not higher than 135°C.

It is also preferred that PP beads (b) show such a first time DSC curve in which an endothermic peak having a peak temperature PTmA is present in a temperature range of not lower than 120°C but not higher than 135°C for reasons of improved heat resistance and capability of reducing the in-mold molding temperature. It is further preferred that PP beads (b) give such a first time DSC curve in which the sum of the calorific values of the endothermic peak or peaks having a peak temperature of not lower than 120°C but not higher than 135°C is 50 to 90% of the total calorific value ΔH of the plurality of endothermic peaks, for reasons of excellent balance between the physical properties such as mechanical strength and heat resistance of PP bead molding (c) obtained therefrom and the in-mold moldability of PP beads (b) at a low temperature.

PP beads (b) providing such a first time DSC curve in which a plurality of endothermic peaks are present may be obtained by using a plurality of polypropylene resins as a base resin thereof. Further, the first time DSC curve of PP beads may show a plurality of endothermic peaks when a dispersion containing unexpanded resin particles is subjected to the above-described isothermal crystallization treatment. The isothermal crystallization treatment may also increase the calorific value of the endothermic peak on a higher temperature side. Thus, it is possible to adjust the sum of the calorific values of endothermic peaks having a peak temperature between 120°C and 135°C to 50 to 90% of a total calorific value of all of the endothermic peaks particularly by the isothermal crystallization treatment. The calorific value of the endothermic peak formed by the isothermal crystallization treatment is preferably 2 to 30 J/g, more preferably 5 to 20 J/g.

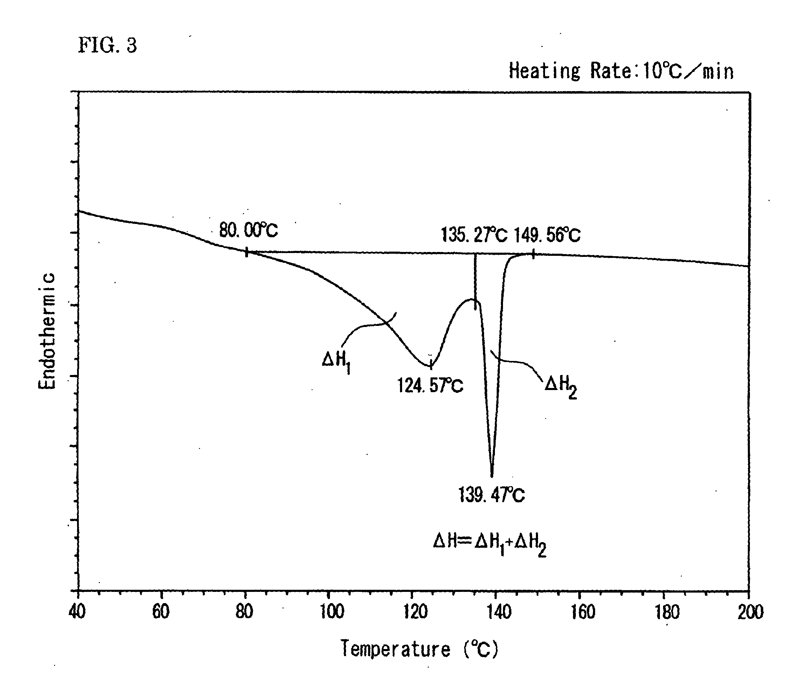

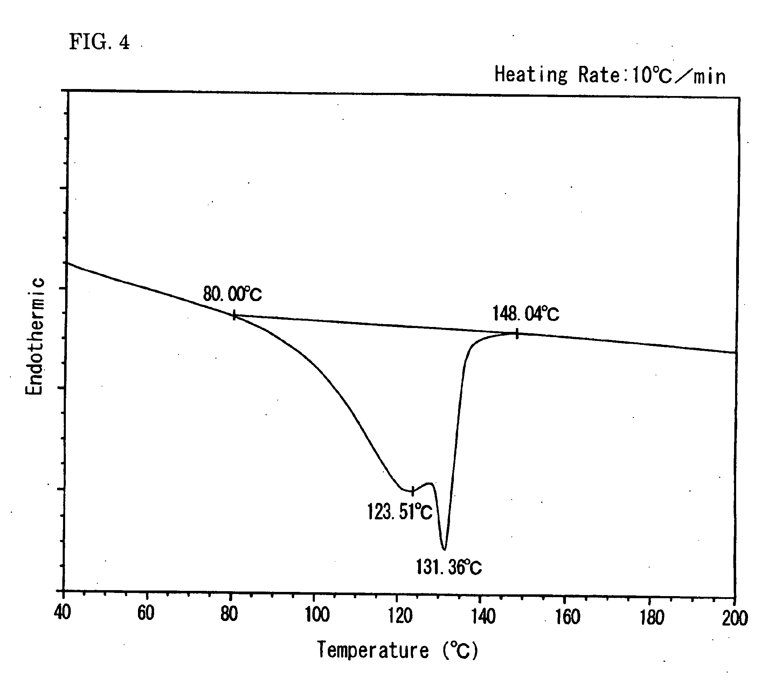

Whether the presence of a plurality of endothermic peaks in a first time DSC curve of PP beads is attributed to an isothermal crystallization treatment or not may be known from the results of a second time DSC curve thereof as explained below with reference to FIGS. 3 and 4.

Let us assume that the first time DSC curve as shown in FIG. 3 is obtained by differential scanning calorimetry in which 1 to 3 mg of PP beads are heated at a heating rate of 10°C/min to 200°C and that the second time DSC curve as shown in FIG. 4 is obtained by the differential scanning calorimetry in which the sample after the first heating is immediately cooled from 200°C to 30°C at a cooling rate of 10°C/min and is then immediately heated from 30°C to 200°C at a heating rate of 10°C/min. It will be noted that the endothermic peak is present at about 139°C in the first DSC curve shown in FIG. 3, while such an endothermic peak is not present in the second DSC curve shown in FIG. 4. The endothermic peak which exists in the first DSC curve but disappears in the second DSC curve is the peak formed as a result of an isothermal crystallization treatment. The other peaks are those inherent to the polypropylene resin.

(3-5) Average cell diameter

PP beads (b) generally have an average cell diameter of 30 to 500 μm, preferably 50 to 350 μm. PP beads (b) having the above average cell diameter have cells walls with high strength so that the cells are not destroyed during the second stage expansion and in-mold molding and, thus, PP beads (b) show good secondary expandability. As used herein, the average cell diameter of PP beads (b) is as measured by the following method. An expanded bead is cut into nearly equal halves and the cross-section is photographed using an electron microscope. On the photograph, four straight lines each passing the center of the cross-section are drawn in a radial pattern. Each of the four straight lines intersects the outer circumference of the bead at two intersection points. The length between the intersection points of each of the four straight lines is measured and the sum L (μm) of the four lengths is calculated. Further, the number (N) of the cells located on the four straight lines is counted. The average cell diameter of the bead is obtained by dividing the length L by the number N (L/N).

The average cell diameter increases with an increase of the melt flow rate of the base resin, an increase of the expansion temperature at which resin particles are foamed and expanded, a decrease of the amount of the blowing agent, a decrease of the cell diameter controlling agent and an increase of the size of the resin particles. PP beads (b) having a desired average cell diameter may be obtained by adjusting the above factors.

The cell diameter controlling agent such as talc, aluminum hydroxide, silica, zeolite and borax is preferably incorporated into resin particles in an amount of 0.01 to 5 parts by weight per 100 parts by weight of the base resin. The average cell diameter varies with the expansion temperature and the kind and amount of the blowing agent. Suitable conditions for the preparation of PP beads (b) having desired average cell diameter can be determined by preliminary experiments on the basis of the above points.

[2] Embodiment-II (PP bead molding (c))

(1) In-mold molding method

PP bead molding (c) is obtained by a batch molding method in which expanded PP beads (b) (if desired, after being treated to increase the inside pressure of the cells to 0.01 to 0.2 MPa(G) in the same manner as that in the afore-mentioned two stage expansion) are filled in an ordinary mold for use in in-mold molding of thermoplastic resin expanded beads which is adapted to be heated and cooled and to be opened and closed. After closing the mold, saturated steam with a saturation vapor pressure of 0.05 to 0.25 MPa(G), preferably 0.08 to 0.20 MPa(G), is fed to the mold to heat and fuse-bond PP beads (b) together. The mold is then cooled and opened to take PP bead molding (c) out of the mold. Details of such an in-mold molding method is disclosed in, for example, Japanese Patent Publications No. JP-H04-46217-B and No. JP-H06-49795-B.

In the above in-mold molding method, PP beads (b) in the mold cavity may be heated with steam by suitably combining heating methods including one-direction flow heating, reversed one-direction flow heating and both-direction heating. One preferred heating method includes preheating, one-direction flow heating, reversed one-direction flow heating and both-direction heating successively performed in this order. The above saturation vapor pressure of 0.05 to 0.25 MPa(G) used for in-mold molding is intended to refer to the maximum of the saturation vapor pressure of steam. The PP bead molding (c) may be also produced by a continuous molding method in which PP beads (b) (if necessary, after being treated to increase the inside pressure of the cells to 0.01 to 0.2 MPa(G)) are fed to a mold space which is defined between a pair of vertically spaced, continuously running belts. During the passage through a steam-heating zone, saturated steam with a saturation vapor pressure of 0.05 to 0.25 MPa(G) is fed to the mold space so that PP beads (b) are foamed, expanded and fuse-bonded together. The resulting molded article is cooled in a cooling zone, discharged from the mold space and successively cut to a desired length to obtain PP bead moldings (c). The above continuous method is disclosed in, for example, Japanese Laid-Open Patent Publications Nos. JP-H09-104026-A, JP-H09-104027-A and JP-H10-180888-A.

When conventional expanded polypropylene resin beads are used, although the degree of difficulty depends upon the shape of the foamed molded article, it is generally difficult to obtain a practically acceptable foamed molded article having an apparent density of 30 g/L or less unless a specific molding method, such as a method in which expanded beads are pretreated to increase the inside pressure thereof or a method in which expanded beads having an apparent density 20 g/L or less are press-filled in a mold cavity at a high compression ratio, is adopted. PP beads (b) according to the present invention, on the other hand, can give excellent PP bead molding (c) without resorting to such a pressurizing or compressing treatment. Further, PP beads (b) according to the present invention can give excellent PP bead molding (c) using a lower molding pressure than that employed in the conventional method.

(2) PP bead molding (c) obtained by in-mold molding

When PP beads (b) in a mold cavity are heated with steam, surfaces of PP beads (b) are melted so that they first begin fusion-bonding to each other. Then, PP beads (b) are softened, foamed and expanded. Thus, because the secondary expansion is preceded by fusion-bonding, the obtained PP bead molding (c) has excellent appearance and high fusion-bonding between beads. Even if PP beads (b) in the mold cavity fail to be uniformly heated with steam, good PP bead molding (c) can be obtained because the temperature range suitable for molding is wide enough.

In PP bead molding (c) of the present invention, the beads are tightly fusion-bonded together and are not debonded from each other. Further, PP bead molding (c) has excellent compressive strength, flexibility, low permanent compression set, smooth surface free of undulation and excellent dimensional stability. Even when PP bead molding (c) has a large thickness, the beads in the inner central portion are highly fusion-bonded to each other.

PP bead molding (c) preferably has a closed cell content in accordance with ASTM-D2856-70, Procedure C of 40% or less, more preferably 30% or less, most preferably 25% or less, for reasons of high mechanical strength. The apparent density of PP bead molding (c) is preferably 10 to 300 g/L, more preferably 13 to 180 g/L, for reasons of high mechanical strength, excellent cushioning property and lightness in weight. The apparent density of PP bead molding (c) may be obtained by dividing the weight (g) thereof by the volume (L) thereof determined from its dimension.

EXAMPLES

The present invention will be further described in detail by way of examples. It should be noted, however, that the present invention is not limited to the examples in any way.

Evaluation methods adopted in the examples are as' follows. A DSC apparatus used in Examples and Comparative Examples is DSC-Q1000 (trade name) manufactured by T A Instrument, Japan.

(1) Evaluation method

(1-1) Base resin

(i) Melting point of base resin

The method described above in "[1] Embodiment-I (PP beads (b)), (2) PP resin (a), (2-3) PP resin (a) of mixed resins, (ii) Method of measuring melting point" was adopted.

(1-2) Expanded beads

(i) Measurement of resin melting point of expanded beads

The method described above in "[1] Embodiment-I (PP beads (b) ), (1) PP beads (b), (1-1) Resin melting point of PP beads (b) determined from DSC curve" was adopted. (ii) Measurement of calorific values of endothermic peaks ($\Delta H1$, $\Delta H_{120-135}$) in first time DSC curve of expanded beads

The method described above in "[1] Embodiment-I (PP beads (b)), (3) Production of PP beads (b), (3-4) Calorific value of endothermic peak in first time DSC curve of PP beads (b)" was adopted.

(iii) Apparent density $\rho_1$ and apparent density ratio $\rho_R$ of expanded beads

The method described above in "[1] Embodiment-I (PP beads (b) ), (1) PP beads (b), (1-2) Ratio $\rho_R$ of apparent densities before and after heating of PP beads (b)" was adopted.

(iv) Measurement of steam pressure required for fusion bonding (minimum steam pressure)

The minimum steam pressure was measured as follows. From the first time DSC curve of expanded beads, the lowest temperature required for fusing surfaces of the expanded beads is estimated. The expanded beads are then molded in a mold cavity having a dimension of 250 mm long, 250 mm wide and 100 mm thick using steam having a temperature equal to the estimated temperature. The obtained foamed molded article is measured for its fusion bonding rate. When the fusion bonding rate is less than 50%, in mold molding of the expanded beads is carried out in the same manner as above except that steam pressure is increased by 0.01 MPa. The obtained foamed molded article is measured for its fusion bonding rate. Similar in-mold molding of the expanded beads is repeated until the fusion bonding rate become 50% or more. In the above-described manner, the minimum saturation vapor pressure of steam at which the fusion bonding rate is 50% or more is determined. This minimum steam pressure is the minimum steam pressure required for fusion bonding of the expanded beads.

The above "fusion bonding rate" of the foamed molded article is as determined by the following method. The obtained foamed molded article is bent in the length or width direction and broken into nearly equal halves. The exposed interface along which the halves have been separated is observed to count a total number C1 of the beads present on the interface and the number C2 of the destroyed beads. The fusion bonding rate is a percentage of the destroyed beads ($C2/C1 \times 100$).

(v) Average cell diameter

The method described above in "[1] Embodiment-I (PP beads (b)), (3) Production of PP beads (b), (3-5) Average cell diameter" was adopted.

(1-3) Foamed molded article

(i) Inside fusion bonding

Expanded beads without any pretreatment such as the above-described inside pressure increasing treatment were molded in a mold cavity having a dimension of 250 mm long, 250 mm wide and 100 mm thick. The obtained foamed molded article was aged and dried in an oven at 80°C for 12 hours, from which a test piece having a dimension of 70 mm long, 70 mm wide and 100 mm thick (thickness of the foamed molded article) was cut out from the center region thereof. The test piece was then bent and broken into halves each having about 50 mm thickness. The exposed interface along which the halves have been separated was observed to count a total number C1 of the beads present on the interface and the number C2 of the destroyed beads, from which a fusion bonding rate was calculated as a percentage of the destroyed beads (C2/C1 $\times$ 100). Inside fusion bonding is evaluated according to the following ratings:

A (good): Fusion bonding rate is 50% or more
C (no good): Fusion bonding rate is less than 50%

(ii) Appearance

Appearance of foamed molded article was observed with naked eyes and evaluated according to the following ratings:

A : No or almost no surface undulations or voids between beads are observed
B: Slight surface undulations and/or voids between beads are observed
C: Significant surface undulations and/or voids between beads are observed

(iii) Dimensional stability

A foamed molded article after aging (at80 °C for 12 hours) was measured for its length, width and thickness, from which differences from the corresponding length, width and thickness dimension of the mold cavity were calculated in terms of percentages. The obtained percentages were averaged to obtain a dimensional difference (%) from the mold cavity. The dimensional stability was evaluated according to the following ratings:

A: Dimensional difference is less than 4%
B: Dimensional difference is 4% or more but no reduction of the thickness in the central region of the foamed molded article is observed
C: Dimensional difference is 4% or more and the thickness in the central region of the foamed molded article is apparently reduced

(2) Base resin used in Examples and Comparative Examples

The base resins used in Examples and Comparative Examples and physical properties thereof are shown in Table 1.
Table 1

| Resin No. | Base Resin | Catalyst used | Ethylene unit content (wt.%) | MFR (g/10 min) | Melting point (°C) |
|---|---|---|---|---|---|
| 1 | Propylene-ethylene random copolymer | Ziegler-Natta catalyst | 2.8 | 5 | 145 |
| 2 | Propylene-ethylene random copolymer | Metallocene catalyst | 1.6 | 8 | 134 |
| 3 | Propylene-ethylene random copolymer | Metallocene catalyst | 1.6 | 27 | 134 |

(continued)

| Resin No. | Base Resin | Catalyst used | Ethylene unit content (wt.%) | MFR (g/10 min) | Melting point (°C) |
|---|---|---|---|---|---|
| 4 | Propylene-ethylene random copolymer | Metallocene catalyst | 2.8 | 7 | 125 |
| 5 | Propylene-ethylene random copolymer | Metallocene catalyst | 2.4 | 27 | 128 |
| 6 | Propylene-ethylene random copolymer | Metallocene catalyst | 2.6 | 8 | 128 |

Examples 1 to 7

(1) Preparation of expanded polypropylene resin beads

Two polypropylene resins were selected from those shown in Table 1 as a base resin and used in the mixing ratios as shown in Table 2. The base resin was kneaded together with 500 ppm by weight of zinc borate in a single screw extruder with 65 mm internal diameter and the kneaded mass was extruded through a die attached to a tip of the extruder into strands. The strands were immediately introduced in water vessel for quenching. The cooled strands were cut into particles each having a mean weight of about 1 mg and dried to obtain resin particles.

In a 5 L autoclave, 1 kg of the above resin particles were charged together with 3 L of water (dispersing medium), 0.3 part by weight of kaolin (dispersing agent), 0.004 part by weight of sodium alkylbenzenesulfonate (surfactant), and 0.01 part by weight of aluminum sulfate. Then, 8 parts by weight of carbon dioxide (blowing agent) were fed to the autoclave under pressure. The dispersion in the autoclave was heated to the expansion temperature shown in Table 2 and maintained at that temperature for 15 minutes to carry out an isothermal crystallization treatment for obtaining desired calorific value of a high temperature peak. Then, one end of the autoclave was opened to discharge the dispersion to the atmosphere to obtain expanded beads. The above "parts by weight" for the using amount of the dispersing agent, surfactant, aluminum sulfate and blowing agent is "per 100 parts by weight of the resin particles".

The obtained expanded beads were measured for DSC characteristics, apparent density $\rho_1$ and apparent density ratio $\rho_R$ before and after heating the expanded beads. The total calorific value $\Delta H$ and calorific value $\Delta H_{120-135}$ of peaks having a peak temperature of between 120°C and 135°C in the first time DSC curve of expanded beads, resin melting point as determined from the second time DSC curve, apparent density $\rho_1$ of the expanded beads and apparent density ratio $\rho_R$ of the expanded beads are shown in Table 2.

The first time DSC curve of the expanded beads obtained in Example 1 is shown in FIG. 3, and the second time DSC curve of the expanded beads obtained in Example 1 is shown in FIG. 4. In FIG. 3, the endothermic peak having a peak temperature of 125°C is inherent to the mixed resin (resins No. 3 and No. 5) used in Example 1, while the endothermic peak having a peak temperature of about 139°C is attributed to the fusion of the secondary crystals formed by the isothermic crystallization treatment in the production process of the expanded beads. In FIG. 4, the endothermic peak attributed to the fusion of the secondary crystals disappear, while the intrinsic endothermic peaks inherent to the mixed resin (resins No. 3 and No. 5) exist at peak temperatures of about 131°C and about 124°C.

(2) Preparation of foamed molded article

The expanded beads obtained above were filled in a mold cavity having a dimension of 250 mm long, 250 mm wide and 100 mm thick and molded with steam at the molding pressure (saturation vapor pressure of steam) shown in Table 2 to obtain a thick foamed molded product. The molded product was then aged in an oven at 80°C for 12 hours to obtain PP bead molding (c). The density and results of evaluation of inside fusion bonding, appearance and dimensional stability of PP bead molding (c) are summarized in Table 2.

Comparative Examples 1 to 9

(1) Preparation of expanded polypropylene resin beads

Expanded polypropylene resin beads were produced in the same manner as described in Examples 1 to 7 except that the combination and mixing ratio of the two polypropylene resins were changed as shown in Table 2. The $\Delta H$ and $AH_{120\text{-}135}$ determined from the first time DSC curve of expanded beads, resin melting point as determined from the second time DSC curve, apparent density $\rho_1$ and apparent density ratio $\rho_R$ before and after the heating of the expanded beads are shown in Table 2.

(2) Preparation of foamed molded article

The thus obtained expanded beads were molded in the same manner as that in Examples 1 to 7 to obtain a thick foamed molded product. The molded product was then aged in an oven at 80°C for 12 hours to obtain a foamed molded article. The density and results of evaluation of inside fusion bonding, appearance and dimensional stability of the foamed molded article are summarized in Table 2.

Results of evaluation

(i) Examples 1 to 7

The expanded beads of Examples 1 to 7 which satisfy the required features of the present invention can give PP bead molding (c) having good fusion bonding between beads in spite of the fact that the in-mold molding is carried out at a low molding pressure. In Example 7, the molding pressure is slightly high because each of the polypropylene resins (No. 2 and No. 4) has MFR of less than 20 g/10 min.

(ii) Comparative Examples 1 to 5

The results of Comparative Examples 1 to 5 indicate that the expanded beads having a density ratio $\rho_R$ of 1.6 or more cannot produce a foamed molded article having good fusion bonding, irrespective of whether the resin melting point as determined from the second time DSC curve of the expanded beads is within the specified range of the present invention or not. As usual, the molding pressure in each of Examples and Comparative Examples was set based on the resin melting point of the expanded polypropylene resin beads. In Comparative Example 1, since the resin melting point is high and outside the specified range, a high molding pressure is needed.

(iii) Comparative Example 6

Comparative Example 6 uses the same resins (Resins No. 3 and No. 5) as Examples 1, 2, 4 and 5. However, the mixing ratio of these resins differs from that of Examples 1, 2, 4 and 5 so that apparent density ratio $\rho_R$ is greater than 1.6. The inside fusion bonding is no good.

(iv) Comparative Example 7

Comparative Example 7 uses the same resins (Resins No. 2 and No. 4) as Example 7 does. However, the mixing ratio of these resins differs from that of Example 7 so that apparent density ratio $\rho_R$ is greater than 1.6. The inside fusion bonding is no good.

(v) Comparative Example 8

Comparative Example 8 uses a mixture of two resins. However, the difference in melting point between the two resins is only 3°C so that apparent density ratio $\rho_R$ is greater than 1.6. The inside fusion bonding is no good.

(iv) Comparative Example 9

Comparative Example 9 uses a mixture of two resins. However, the difference in melting point between the two resins is as large as 17°C so that apparent density ratio $\rho_R$ is greater than 1.6. The inside fusion bonding and appearance (surface evenness) are no good. Further, the minimum steam pressure is high.

Table 2

| Example No. | Base resin | | | Expansion conditions | | Expanded beads (PP beads (b)) | | | | |
|---|---|---|---|---|---|---|---|---|---|---|
| | Resin No. | Resin mixing ratio | Melting point difference [°C] | Expansion temperature [°C] | Vessel inside pressure [MPa(G)] | Resin melting point [°C] | $\rho_1$ [g/L] | Average cell diameter [μm] | ΔH [J/g] | $\Delta H_{120-135}$ [J/g] |
| 1 | No. 3 / No. 5 | 30 / 70 | 6 | 132 | 3.2 | 131 | 78 | 224 | 58 | 44 |
| 2 | No. 3 / No. 5 | 40 / 60 | 6 | 133 | 3.2 | 131 | 77 | 185 | 58 | 48 |
| 3 | No. 2 / No. 5 | 30 / 70 | 6 | 133 | 3.2 | 131 | 75 | 153 | 65 | 55 |
| 4 | No. 3 / No. 5 | 20 / 80 | 6 | 130 | 3.5 | 130 | 73 | 248 | 59 | 47 |
| 5 | No. 3 / No. 5 | 50 / 50 | 6 | 133 | 3.2 | 131 | 76 | 152 | 62 | 50 |
| 6 | No. 2 / No. 5 | 50 / 50 | 6 | 135 | 2.9 | 132 | 70 | 141 | 67 | 59 |
| 7 | No. 2 / No. 4 | 40 / 60 | 9 | 131 | 3.5 | 130 | 75 | 136 | 60 | 49 |
| Comp. 1 | No. 1 | - | - | 151 | 2.5 | 145 | 72 | 172 | 78 | 64 |
| Comp. 2 | No. 2 | - | - | 138 | 2.8 | 134 | 77 | 181 | 75 | 67 |
| Comp. 3 | No. 3 | - | - | 140 | 2.3 | 134 | 75 | 267 | 70 | 61 |
| Comp. 4 | No. 4 | - | - | 128 | 2.8 | 125 | 73 | 219 | 55 | 49 |
| Comp. 5 | No. 5 | - | - | 129 | 2.7 | 128 | 74 | 262 | 69 | 60 |
| Comp. 6 | No. 3 / No. 5 | 70 / 30 | 6 | 136 | 2.8 | 133 | 70 | 124 | 66 | 56 |
| Comp. 7 | No. 2 / No. 4 | 60 / 40 | 9 | 137 | 2.5 | 132 | 72 | 180 | 64 | 56 |
| Comp. 8 | No. 4 / No. 6 | 40 / 60 | 3 | 129 | 3.0 | 127 | 76 | 152 | 60 | 50 |
| Comp. 9 | No. 1 / No. 5 | 40 / 60 | 17 | 141 | 2.6 | 138 | 75 | 197 | 73 | 61 |

Table 2 (continued)

| Example No. | Expanded beads (PP beads (b)) | | Foamed molded article (PP bead molding (c)) | | | | |
| | ρ_R (Heating temperature [°C]) | Minimum steam pressure [MPa(G)] | Molding pressure [MPa(G)] | Density [g/L] | Inside fusion bonding | Appearance | Dimensional stability |
|---|---|---|---|---|---|---|---|
| 1 | 1.4 (126) | 0.14 | 0.16 | 53 | A | A | A |
| 2 | 1.5 (126) | 0.15 | 0.16 | 52 | A | A | A |
| 3 | 1.5 (126) | 0.12 | 0.13 | 51 | A | A | A |
| 4 | 1.4 (125) | 0.13 | 0.15 | 49 | A | A | A |
| 5 | 1.3 (126) | 0.15 | 0.17 | 51 | A | A | A |
| 6 | 1.5 (127) | 0.15 | 0.16 | 47 | A | A | A |
| 7 | 1.5 (125) | 0.16 | 0.18 | 51 | C | A | A |
| Comp. Ex. 1 | 1.8 (140) | 0.32 | 0.32 | 49 | C | A | A |
| Comp. Ex. 2 | 1.6 (129) | 0.16 | 0.16 | 52 | C | A | A |
| Comp. Ex. 3 | 2.0 (129) | 0.17 | 0.17 | 51 | C | A | A |
| Comp. Ex. 4 | 2.1 (120) | 0.12 | 0.12 | 49 | C | A | B |
| Comp. Ex. 5 | 1.7 (123) | 0.10 | 0.10 | 50 | C | A | A |
| Comp. Ex. 6 | 1.9 (128) | 0.15 | 0.15 | 47 | C | A | B |
| Comp. Ex. 7 | 2.0 (127) | 0.16 | 0.16 | 49 | C | A | B |
| Comp. Ex. 8 | 1.8 (122) | 0.14 | 0.14 | 51 | C | A | B |
| Comp. Ex. 9 | 1.7 (133) | 0.22 | 0.22 | 51 | C | B | B |

**Claims**

1. Expanded polypropylene resin beads (b) having a resin melting point of not less than 120°C but less than 140°C, said resin melting point being determined from a DSC curve obtained by heat flux differential scanning calorimetry in accordance with JIS K7121-1987 in which a sample of 1 to 3 mg of the expanded polypropylene resin beads (b) is heated to 200°C at a heating rate of 10°C/minute, then cooled to 30°C at a rate of 10°C/minute, and again heated from 30°C to 200°C at a heating rate of 10°C/minute to obtain the DSC curve, said expanded polypropylene resin beads (b) having an apparent density $\rho_1$ before heating and an apparent density $\rho_2$ after being heated for 10 seconds in a closed vessel with saturated steam at a temperature lower by 5°C than the resin melting point, wherein a ratio $\rho_R$ of the apparent density $\rho_1$ before heating to the apparent density $\rho_2$ after heating is not greater than 1.5, wherein the expanded polypropylene resin beads (b) comprise a polypropylene resin (a) as a base resin, said polypropylene resin (a) being a mixed resin containing 50 to 80% by weight of a polypropylene resin (a1) having a melting point higher than 110°C but not higher than 135°C and 50 to 20% by weight of a polypropylene resin (a2) having a melting point not lower than 125°C but not higher than 140°C with the total amount of the polypropylene resins (a1) and (a2) being 100% by weight, wherein a difference in melting point between the polypropylene resins (a1) and (a2) [(melting point of (a2)) - (melting point of (a1))] is not less than 5°C but less than 15°C and wherein the polypropylene resins (a1) is a polypropylene resin obtained using a metallocene polymerization catalyst.

2. The expanded polypropylene resin beads (b) as recited in claim 1, wherein both the polypropylene resins (a1) and (a2) are a polypropylene resin obtained using a metallocene polymerization catalyst.

3. The expanded polypropylene resin beads (b) as recited in claim 1, wherein at least one of the polypropylene resins (a1) and (a2) has a melt flow rate, as measured in accordance with JIS K7210-1999, Test Condition M (at a temperature of 230°C and a load of 2.16 kg) of 20 g/10 min or more.

4. The expanded polypropylene resin beads (b) as recited in claim 1, wherein the expanded polypropylene resin beads (b) show a plurality of endothermic peaks in a DSC curve obtained by heat flux differential scanning calorimetry in accordance with JIS K7122-1987 in which a sample of 1 to 3 mg of the expanded polypropylene resin beads (b) is heated from ambient temperature to 200°C at a heating rate of 10°C/minute, and wherein the sum of the calorific values of peaks having a peak temperature in the range of from 120°C to 135°C is 50 to 90% of a total calorific value of said plurality of endothermic peaks.

5. A molded foamed article obtained by molding the expanded polypropylene resin beads (b) according to any one of claims 1 to 4 in a mold cavity.

**Patentansprüche**

1. Expandierte Polypropylenharzperlen (b) mit einem Harzschmelzpunkt von nicht weniger als 120°C aber weniger als 140°C, wobei der Harzschmelzpunkt aus einer DSC-Kurve bestimmt wird, die durch Wärmestrom-Differentialscanningkalorimetrie in Übereinstimmung mit JIS K7121-1987 erhalten wird, bei der eine Probe von 1 bis 3 mg der expandierten Polypropylenharzperlen (b) auf 200°C erhitzt wird bei einer Heizrate von 10°C/Minute, dann auf 30°C abgekühlt wird bei einer Rate von 10°C/Minute, und wieder erhitzt wird von 30°C auf 200°C bei einer Heizrate von 10°C/Minute, um die DSC-Kurve zu erhalten, wobei die expandierten Polypropylenharzperlen (b) eine Rohdichte $\rho_1$ vor dem Erhitzen haben und eine Rohdichte $\rho_2$, nachdem sie für 10 Sekunden in einem geschlossenen Gefäß mit gesättigtem Dampf bei einer Temperatur, die um 5°C unter dem Harzschmelzpunkt liegt, erhitzt wurden, wobei ein Verhältnis $\rho_R$ der Rohdichte $\rho_1$ vor dem Erhitzen zu der Rohdichte $\rho_2$ nach dem Erhitzen nicht größer als 1,5 ist, wobei die expandierten Polypropylenharzperlen (b) ein Polypropylenharz (a) als ein Basisharz umfassen, wobei das Polypropylenharz (a) ein gemischtes Harz ist, welches 50 bis 80 Gew.-% eines Polypropylenharzes (a1) mit einem Schmelzpunkt höher als 110°C, aber nicht höher als 135°C enthält und 50 bis 20 Gew.-% eines Polypropylenharzes (a2) mit einem Schmelzpunkt nicht niedriger als 125°C, aber nicht höher als 140°C, wobei die Gesamtmenge der Polypropylenharze (a1) und (a2) 100 Gew.-% beträgt, wobei eine Differenz im Schmelzpunkt zwischen den Polypropylenharzen (a1) und (a2) [(Schmelzpunkt von (a2)) - (Schmelzpunkt von (a1))] nicht weniger als 5°C, aber weniger als 15°C beträgt, und wobei das Polypropylenharz (a1) ein Polypropylenharz ist, welches durch Verwendung eines Metallocen-Polymerisations-Katalysators erhalten wird.

2. Expandierte Polypropylenharzperlen (b) nach Anspruch 1, wobei beide Polypropylenharze (a1) und (a2) Polypropylenharze sind, die durch Verwendung eines Metallocen-Polymerisations-Katalysators erhalten werden.

3. Expandierte Polypropylenharzperlen(b) nach Anspruch 1, wobei wenigstens eines der Polypropylenharze (a1) und (a2) eine Schmelzflussrate von 20 g/10 Minuten oder mehr aufweist, wie in Übereinstimmung mit JIS K7210-1999, Testbedingung M (bei einer Temperatur von 230°C und einer Beschickung mit 2,16 kg) gemessen.

4. Expandierte Polypropylenharzperlen (b) nach Anspruch 1, wobei die expandierten Polypropylenharzperlen (b) eine Vielzahl von endothermen Peaks in einer DSC-Kurve zeigen, welche durch Wärmestrom-Differentialscanningkalorimetrie in Übereinstimmung mit JIS K7122-1987 erhalten wurde, bei der eine Probe von 1 bis 3 mg der expandierten Polypropylenharzperlen (b) von Raumtemperatur auf 200°C bei einer Heizrate von 10°C/Minute erhitzt wird, und wobei die Summe der Heizwerte von Peaks mit einer Peaktemperatur im Bereich zwischen 120°C und 135°C 50 bis 90 % eines totalen Heizwertes der Vielzahl von endothermen Peaks beträgt.

**5.** Formgeschäumter Gegenstand, welcher erhalten wird durch Formen der expandierten Polypropylenharzperlen (b) nach einem der Ansprüche 1 bis 4 in einer Formkavität.

**Revendications**

**1.** Perles (b) en résine de polypropylène expansée possédant un point de fusion de la résine non inférieur à 120°C, mais inférieur à 140°C, ledit point de fusion de la résine étant déterminé à partir d'une courbe DSC obtenue par calorimétrie pour analyse différentielle d'écoulement thermique conformément au brevet JIS K7121-1987, un échantillon de 1 à 3 mg des perles (b) en résine de polypropylène expansée étant porté à 200°C à une vitesse de montée en température de 10°C/minute, puis refroidi à 30°C à vitesse de 10°C/minute et de nouveau porté de 30°C à 200°C à une vitesse de montée en température de 10°C/minute pour obtenir la courbe DSC,
lesdites perles (b) en résine de polypropylène expansée possédant une densité apparente $\rho_1$ avant le chauffage et une densité apparente $\rho_2$ après avoir été réchauffées pendant 10 secondes dans un récipient fermé à vapeur saturée à une température inférieure de 5°C au point de fusion de la résine, un rapport $\rho_R$ de la densité apparente $\rho_1$ avant le chauffage à la densité apparente $\rho_2$ après le chauffage n'étant pas supérieur à 1,5, les perles (b) en résine de polypropylène expansée contenant une résine de propylène (a) comme résine de base, ladite résine de propylène (a) étant une résine mixte contenant 50 à 80% en poids d'une résine de polypropylène (a1) ayant un point de fusion supérieur à 110°C mais non supérieur à 135°C et 50 à 20% en poids d'une résine de polypropylène (a1) ayant un point de fusion non inférieur à 125°C, mais non supérieur à 140°C, la quantité totale des résines de propylène (a1) et (a2) étant de 100% en poids, une différence de point de fusion entre les résines de propylène (a1) et (a2) [(point de fusion de (a2)) - (point de fusion de (a1))] n'étant pas inférieure à 5°C mais inférieure à 15°C, les résines de propylène (a1) étant une résine de polypropylène obtenue en utilisant un catalyseur de polymérisation en alliage organométallique.

**2.** Perles (b) en résine de polypropylène expansée, telles que mentionnées dans la revendication 1, les résines de propylène (a1) et (a2) étant une résine de polypropylène obtenue en utilisant un catalyseur de polymérisation en alliage organométallique.

**3.** Perles (b) en résine de polypropylène expansée, telles que mentionnées dans la revendication 1, au moins une des résine de polypropylène (a1) et (a2) présentant un indice de fusion, mesuré conformément au brevet JIS K7210-1999, condition d'essai M (à une température de 230°C et sous une charge de 2,16 kg) de 20g/10 min ou plus.

**4.** Perles (b) en résine de polypropylène expansée, telles que mentionnées dans la revendication 1, les perles (b) en résine de polypropylène expansée comprenant une pluralité de pics endothermiques dans une courbe DSC obtenue par calorimétrie différentielle de flux thermique conformément au brevet JIS K7122-1987, un échantillon de 1 à 3 mg des perles (b) en résine de polypropylène expansée étant porté de la température ambiante à 200°C à une vitesse de montée en température de 10°C/minute, la somme des valeurs calorifiques de pics donnent une température de pic dans le domaine compris entre 120°C et 130°C représentant 50 à 90% d'une valeur calorifique totale de ladite pluralité de pics endothermiques.

**5.** Article en mousse moulé obtenu par moulage des perles (b) en résine de polypropylène expansée selon l'une quelconque des revendications 1 à 4 dans une cavité de moule.

FIG. 1

$\Delta H = \Delta H_1 + \Delta H_2 + \Delta H_3$

FIG. 2

FIG. 3

Heating Rate:10°C/min

EP 2 072 207 B1

FIG. 4

Heating Rate:10℃／min

Endothermic

80.00℃

148.04℃

123.51℃

131.36℃

Temperature (℃)

40    60    80    100   120   140   160   180   200

EP 2 072 207 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000000894 A
- WO 03078127 A
- US 2004256757 A1
- US 2003124335 A1
- JP H06240041 A
- JP H10292064 A
- JP 09227710 A
- JP 2006096805 A
- US 2004054042 A1
- WO 0006636 A
- EP 1036814 A

- JP 2003327740 A
- JP 2006069143 A
- JP S492183 B
- JP S561344 B
- JP S6261227 B
- JP H0446217 B
- JP H0649795 B
- JP H09104026 A
- JP H09104027 A
- JP H10180888 A